# EUROPEAN PATENT APPLICATION

(11) **EP 3 091 389 A1**
(43) Date of publication of application: **09.11.2016**
(21) Application number: 15002043.6
(22) Date of filing: 08.07.2015
(51) Int. Cl.: G02C 7/16, G02C 7/04

(54) **SOFT CONTACT LENS FOR PRESBYOPIA AND MANUFACTURING METHOD THEREFOR**

(30) Priority: 08.05.2015 KR 20150064830
(71) Applicant: Koryoeyetech., Co. Ltd., Gangnam-gu Seoul 135-867 (KR)
(72) Inventor: LEE, Chang Seon, 135-867 Seoul (KR)
(74) Representative: Samson & Partner Patentanwälte mbB

(57) **Abstract**

A soft contact lens, comprising: a light transmitting region formed in a preset size with respect to a reference point which is spaced apart from a central portion of the contact lens by a preset distance, and configured to transmit incident light; and a first light blocking region provided at an outside of the light transmitting region and having a size larger than the light transmitting region and smaller than the soft contact lens, and configured to block the incident light.

## Description

### Field of the Invention

The present disclosure relates to a soft contact lens; and, more particularly, to a soft contact lens for presbyopia designed to correspond to different corneal topographic patterns of individual users by adjusting a light transmitting region of the contact lens according to a corneal topographic pattern of each user. Further, the present disclosure also pertains to a manufacturing method for the soft contact lens.

### Background of the Invention

In general, to see a near object after seeing a distant object with human eyes, a refractive power of the eyes needs to be changed. Since forward-backward lengths of the cornea and the eye ball cannot be changed, a refractive power of a lens within the eyeball, i.e., a crystalline lens is increased to see the near object. This adjustment of the crystalline lens is referred to as accommodation.

With aging, however, the crystalline lens is hardened and its elasticity is weakened. As a result, the accommodation ability is degraded, and the eye exhibits a diminished ability to see a near object, which is called presbyopia.

This presbyopia is a kind of senility phenomenon. As a person gets older, the accommodation ability of the eye diminishes. A loss of elasticity of the crystalline lens or the ciliary body (a muscle that adjusts the refractive power of the crystalline lens at both ends of the crystalline lens) and hypertrophy of the crystalline lens are postulated as the causes of the presbyopia.

At a young age, the elasticity of the ciliary body and the crystalline body is excellent. Thus, when the person see a very near object, the ciliary body contracts and the crystalline lens thickens to exhibit a strong refractive power, thus allowing the eye to focus on the near object and to see it clearly. As the person gets older, however, the crystalline lens is hypertrophied and its refractive power declines. Thus, when the person sees a near object, the refractive power of the crystalline lens does not increase any more. As a result, the person may have a blurred vison on the near object, though they can see a distant object well.

Meanwhile, to correct presbyopia, an optical correction method and a surgical correction method have been generally proposed conventionally. Although there has been suggested no perfect remedy to prevent and cure the presbyopia so far, many researches have been conducted on the presbyopia to help to maintain a short-distance eyesight to some extent, including the optical correction method and the surgical correction method.

Existing methods from one using low-priced magnifying glasses to experimental one using a surgical process aim at recovering the accommodation ability to correct the presbyopia.

By way of example, a double-focus or multifocal contact lens may have a higher refractive power at its center portion or may have an asymmetric design. A lens with a higher center refractive power may have a strong refractive power at its central portion and its refractive power may diminish towards an edge thereof. A lens with an asymmetric design uses optical diffraction that focuses light at different distances. A focus distribution for a near object or a distant object may differ depending on a diffraction design.

Further, a monovision contact lens is used to focus one eye for near vision and the other eye for distant vision. This monovision provides clear vision for both near and distance. Generally, a person's dominant eye is prescribed for distant vision, whereas the other non-dominant eye is prescribed for near. If, however, the person is not accustomed to this even after two weeks of adjustment, the prescription may be made in the reverse way. During the period of adjustment, the presbyopic eyes may endure the monovision and learn to ignore an image out of a focus.

The use of the monovision contact lens, however, accompanies declines of eyesight and contrast sensitivity. Further, the use of the monovision contact lens may also accompany many problems such as glare, ambiopia, halo sign, and declined sense of distance, etc., and even cause eye fatigue and headache.

### Summary of the Invention

In view of the foregoing, the present disclosure provides a soft contact lens for presbyopia capable of increasing the depth of a focus by selectively blocking incident light upon eyes by way of forming, in the manufacture of the soft contact lens, a light transmitting region having a certain diameter with respect to a reference point which is spaced apart from the center of the soft contact lens by a certain distance, and, also, capable of providing relatively bright vision by forming, at an outside of the light transmitting region, a light blocking region which has a certain diameter and is provided with fine holes. Further, present disclosure also provides a manufacturing method for this soft contact lens.

In addition, the present disclosure also provides a soft contact lens for presbyopia capable of corresponding to different corneal topographic patterns of individual users by allowing an image forming region on the soft contact lens to be varied depending on a corneal topographic pattern of each user, and, also, provides a manufacturing method for this soft contact lens.

In accordance with one exemplary embodiment of the present disclosure, a soft contact lens, comprising: a light transmitting region formed in a preset size with respect to a reference point which is spaced apart from a central portion of the contact lens by a preset distance, and configured to transmit incident light; and a first light blocking region provided at an outside of the light transmitting region and having a size larger than the light transmitting region and smaller than the soft contact lens, and configured to block the incident light.

In the embodiment, wherein a multiple number of fines holes for allowing the incident light to pass therethrough is distributed across the entire first light blocking region in a non-uniform manner.

In the embodiment, wherein the reference point is spaced apart from the central portion of the soft contact lens to correspond to a distance and a direction in which a center of an eyeball of a user is deviated from the central portion of the soft lens.

In the embodiment, wherein the light transmitting region is formed at a certain position on the soft contact lens within the range of a reference circle which is formed to have a preset diameter from the central portion, and the reference circle is larger than the first light blocking region and smaller than the soft contact lens.

In the embodiment, wherein the fine holes are distributed such that a distribution density increases toward an outer edge of the first light blocking region.

In the embodiment, the soft contact lens further comprising: a second light blocking region provided at an adjacent area between the light transmitting region and the first light blocking region and having a size smaller than the first light blocking region, and configured to block the incident light.

In the embodiment, wherein the soft contact lens is a color lens tinted with a certain color.

In accordance with another exemplary embodiment of the present disclosure, a manufacturing method for a soft contact lens, comprising: forming a light transmitting region, which is configured to transmit incident light and has a preset size, with respect to a reference point which is spaced apart from a central portion of the contact lens by a preset distance; and forming, at an outside of the light transmitting region, a first light blocking region which is configured to block the incident light and has a size larger than the light transmitting region and smaller than the soft contact lens.

In the embodiment, the manufacturing method further comprising: forming a multiple number of fines holes for allowing the incident light to pass therethrough across the entire first light blocking region in a non-uniform manner.

In the embodiment, wherein the reference point is spaced apart from the central portion of the soft contact lens to correspond to a distance and a direction in which a center of an eyeball of a user is deviated from the central portion of the soft lens.

In the embodiment, wherein the light transmitting region is formed at a certain position on the soft contact lens within the range of a reference circle which is formed to have a preset diameter from the central portion, and the reference circle is larger than the first light blocking region and smaller than the soft contact lens.

In the embodiment, wherein the light transmitting region is formed to have a diameter larger than zero (0) and smaller than a diameter of an opening portion on an eye lens on which the soft contact lens is put on.

In the embodiment, wherein the first light blocking region is formed to be concentric with the light transmitting region and to have a doughnut shape having a diameter larger than a diameter of the light transmitting region and smaller than a diameter of the soft contact lens.

In the embodiment, wherein the fine holes are formed such that a distribution density thereof increases toward an outer edge of the first light blocking region.

In the embodiment, the manufacturing method further comprising: forming, at an adjacent area between the light transmitting region and the first light blocking region, a second light blocking region having a size smaller than the first light blocking region and configured to block the incident light.

According to the exemplary embodiments of the present disclosure as described above, in the manufacture of a soft contact lens for presbyopia, by forming a light transmitting region having a certain diameter with respect to a reference point, which is spaced apart from the center of the soft contact lens by a certain distance, incident light upon eyes can be selectively blocked, and, thus, the depth of a focus can be improved.

Further, by forming a light blocking region having a certain diameter at an outside of the light transmitting region and forming fine holes in the light blocking region such that a distribution density of the fine holes increases toward an outer edge of the light blocking region, .a sufficient amount of light, which might not be obtained under the presence of the light blocking region, can be achieved, so that bright vision can be achieved.

Additionally, since a position of forming a presbyopia improving pattern including the light transmitting region and the light blocking region on the soft contact lens is adjustable according to a corneal topographic pattern of a user, the soft contact lens can be used without problems when applied to different users having different corneal topographic patterns

Moreover, .by tinting the light transmitting region and the light blocking region with colors capable of adjusting contrast sensitivity, not only the contrast sensitivity can be adjusted, but ultraviolet rays or blue light can also be blocked, so that impairment of the optic nerves or cells can be avoided.

Furthermore, by tinting the light transmitting region and the light blocking region with colors selected by the user, even an esthetic effect can also be achieved when the soft contact lens is applied to a user who has suffered damage in iris such as iridocoloboma.

### Brief Description of the Drawings

FIG. 1 is a diagram showing an example where a soft contact lens for presbyopia according to an exemplary embodiment of the present disclosure is put on an eyeball.
FIG. 2 is a detailed view illustrating a structure of a soft contact lens for presbyopia according to an exemplary embodiment of the present disclosure.
FIG. 3 provides diagrams showing examples where a presbyopia correction pattern and a center of a pupil of an eye misalign.
FIG. 4 is a diagram showing an example of adjusting a presbyopia correction pattern in view of a corneal topographic pattern of a user.
FIG. 5 is a diagram showing an example of coloring a soft contact lens for presbyopia according to an exemplary embodiment of the present disclosure.

### Detailed Description of the Embodiments

The features and operation principles of the present disclosure will be described in detail with reference to the accompanying drawings, which form a part hereof. In discussing exemplary embodiments, detailed description of known functions or configurations will be omitted when the description disturbs clear understanding of the essentials of the present disclosure. Further, the various terms used below are defined in consideration of functions in the present disclosure, and different terms may be used depending on users, operator or practices in the relevant art. Thus, definition of the various terms used in the present application should be formulated based on the whole disclosure of the present application.

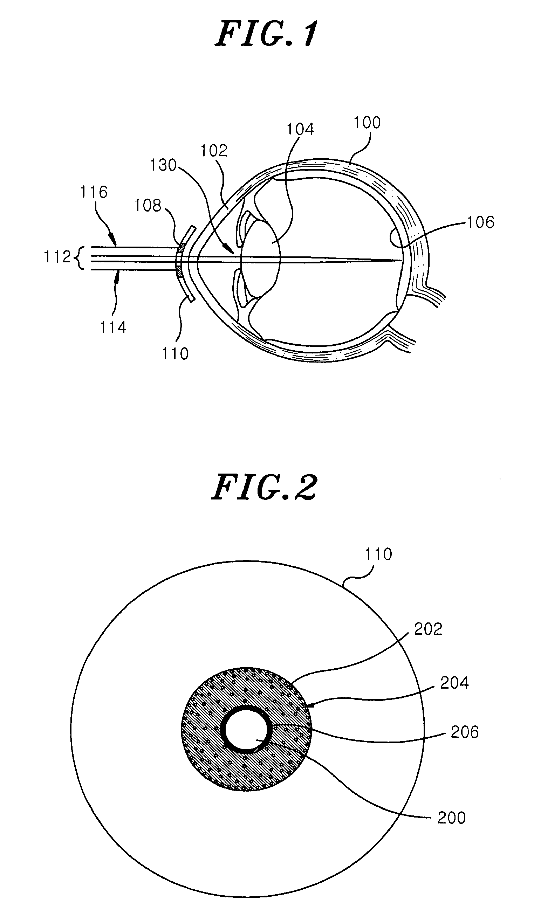

FIG. 1 is a diagram illustrating an example where a soft contact lens for presbyopia according to an exemplary embodiment of the present disclosure is put on an eyeball.

As depicted in FIG. 1, a human eye 100 includes a cornea 102; an eye lens 104, i.e., a crystalline lens, located at a rear surface of the cornea 102 within the eyeball; and so forth. The cornea 102 is a first focus forming element, and the eye lens 104 is a second focus forming element. The human eye 100 also includes a retina 106 which is in contact with the inside of a rear surface of the eye 100. The retina 106 includes receptor cells and a high-sensitivity region known as a macula. Signals are received at the retina and transmitted to the visual center of the brain through optic nerves.

In the human eye 100, incident light 112 upon the cornea 102 is focused on a surface of the retina 106 after refracted through the eye lens 104, thus allowing a person to recognize an object. If, however, the eye lens 104 is not smoothly contracted as a result of presbyopia or the like, a part of the light 112 that has reached the retina 102 through various paths may not exactly focus on the surface of the retina 106, resulting in a presbyopic phenomenon such as blurred vision on the object, as mentioned earlier.

To solve the problem, according to the present disclosure, a soft contact lens 110 provided with a light blocking portion 108 capable of blocking the light 112 selectively to thereby adjust the amount of the light 112 that arrives at the retina 102 is put on the cornea 102. If this soft contact lens 110 is put on, the light 112 that arrives at the eye lens 104 through the cornea 102 can be selectively blocked, as depicted in FIG. 1. Accordingly, rays 114 and 116 that are incident upon the retina 106 through out-of-focusing paths can be blocked, so that the depth of a focus can be heightened.

At this time, although the vision may be darkened due to the blocking of the rays 114 and 116 for the purpose of increasing the depth of the focus, such a problem can be solved by forming, at the light blocking region 108, a multiple number of fine holes (not shown) for allowing light to pass therethrough, bright vision can be obtained. A more detailed mechanism of the soft contact lens 110 will be discussed below with reference to FIG. 2 which shows a structure of the soft contact lens 110.

FIG. 2 depicts a structure of the soft contact lens for presbyopia of FIG. 1 according to the exemplary embodiment of the present disclosure. The soft contact lens 110 includes a light transmitting region 200; a first and a second light blocking region 202 and 206 forming the light blocking portion 108; and fine holes 204 provided within the first light blocking region 202.

Below, a mechanism of each component of the soft contact lens 110 for presbyopia according to the exemplary embodiment will be described in detail with reference to FIG. 1 and FIG. 2.

First, the light transmitting region 200 is formed at a central portion of the soft contact lens 110 in a preset size and transmits incident light. The light transmitting region 110 serves to reduce an eyeball size, thus reducing the light 112 incident upon the retina 102 from different directions while allowing the light 112 to reach the retina 106 only in consistent directions, resulting in an increase of the depth of the focus for the light 112 to focus on the retina 106.

That is, the light 112 incident upon the retina 102 at various positions forms images of an object at various positions on the retina 106. Thus, if an incident angle of the light 112 is reduced by providing the light transmitting region 200, a path through which the light 112 enters is narrowed. As a result, the amount of the incident light 112 is reduced, and, thus, a part of the various images formed at the various positions may disappear, resulting in an increase of the depth of the focus. At this time, the light passing through the same path forms a clear image constantly regardless of a distance of the light.

Meanwhile, in general, the depth of the focus may increase with a decrease of the size of the light transmitting region 200. If, however, the light transmitting region 200 is too small, it may not be suitable for the eyeball usually having a size in the range from about 2 mm to about 4 mm. Also, if the size of the light transmitting region 200 is too small, a doughnut shape may be seen when the eyeball expands due to light reflection in the environment where the light is weak. Meanwhile, if the light transmitting region 200 is too large, the pinhole effect would be declined, making it impossible to adjust the depth of the focus.

Thus, the light transmitting region 200 may be formed in a circular shape having a predetermined diameter, as shown in FIG. 2. The light transmitting region 200 is formed to have a diameter smaller than that of an opening region 130 on the eye lens 104 so that it can reduce the eyeball size. Here, the diameter of the light transmitting region 200 may be set to, for example, about 1.00 mm to about 2.20 mm.

Here, though the light transmitting region 200 is described to have the circular shape for the convenience of explanation, the shape of the light transmitting region 200 may be modified in various ways and may be a rectangle or a rhombus, as occasion arises.

The first light blocking region 202 is formed at an outside of the light transmitting region 200, having a size larger than the light transmitting region 200 and smaller than the soft contact lens 110. This first light blocking region 202 blocks some of the light 112 that attempts to reach the retina 102. At this time, the first light blocking region 202 may be formed to have a diameter larger than that of the light transmitting region 200 and smaller than that of the soft contact lens 110.

As stated above, due to the light blocking function of the first light blocking region 202, only the rays 114 and 116 of the incident light 112 passing through the light transmitting region 200 are transmitted, so that the depth of the focus can be improved.

If, however, the light is completely blocked by the first light blocking region 202, the amount of the light 112 incident upon the eye 100 may be reduced, and the vision would be darkened and a doughnut shape conforming to the first light blocking region 202 would appear into sight,

In view of this problem, by forming the multiple number of fine holes 204, which are capable of allowing the light 112 to pass therethrough, at the first light blocking region 202, as shown in FIG. 2, the amount of the incident light 112 can be additionally obtained to some extent, and, thus, the doughnut shape phenomenon can be reduced and bright vision can be achieved. Here, the fine holes 204 may be distributed within the first light blocking region 202 in a non-uniform manner. More desirably, for example, it is configured that more fine holes exists, that is, a distribution density of the fine holes 204 increases as it goes toward an outer edge of the first light transmitting region 202. With this configuration, viewing a doughnut-shaped blur image can be further suppressed. Furthermore, due to the gradually increasing fine holes 204, a certain amount of transmitted light 112 can be obtained, so that the overall vision can be brightened.

The smaller the gap between the fines holes 204 is, the more sufficient light can be obtained, whereas the larger the gap is, the better the contrast would be. Thus, the first light blocking region 202 may be divided in two or three parts, and the respective parts may be assigned gradually differed brightness. At this time, the diameter of each fine hole 204 may be set to be in the range from, by way of example, but not limitation, about 0.10 mm to about 0.20 mm, and the diameter of the first light blocking region 202 may be set to, for example, about 4.00 mm to about 9.50 mm.

The second light blocking region 206 is formed in an adjacent area to the first light blocking region 202 and the light transmitting region 200 such as a boundary between the light transmitting region 200 and the first light blocking region 202, and the second light blocking region 206 blocks the light 112. The second light blocking region 206 may be tinted with a dark color. Due to the presence of this second light blocking region 206, the pinhole effect can be further enhanced, and, thus, the depth of the focus can be further heightened. That is, in case that the multiple number of fine holes 204 are distributed across the entire the first light blocking region 202, the light 112 passes through the fine holes 204 and an astigmatic effect may appear at a dark place due to the expansion of the eyeball. The presence of the dark-colored second light blocking region 206 can diminish this phenomenon. Here, the color for the second light blocking region 206 may be set to be in the same color range as that of the first light blocking region 202 and to have a higher darkness than a preset reference value. Further, this second light blocking region 206 may be formed to have a diameter larger than that of the light transmitting region 200 by, for example, about 2.5 mm to about 3.5 mm.

Meanwhile, in the above description of the soft contact lens for presbyopia shown in FIG. 2, a presbyopia correction pattern composed of the light transmitting region 200, the first light blocking region 202, the second light blocking region 206, and the like has been described to be formed at a central portion of the soft contact lens 110 as a general case.

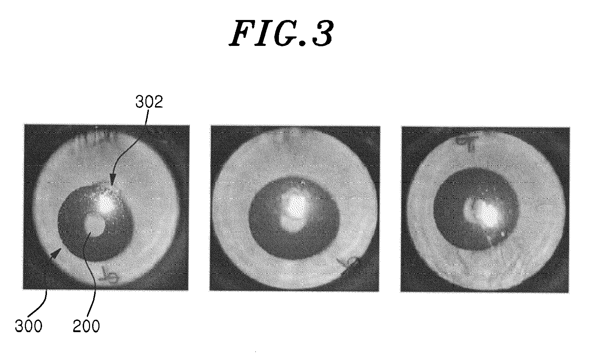

However, since corneal topographic patterns of individual users are different, the light transmitting region 200 of a presbyopia correction pattern 300 formed on the soft contact lens may not exactly coincide with the center of an eyeball 302 of a certain user, as illustrated in FIG. 3. In such a case, only a part of light that penetrates the light transmitting region 200 may be delivered to the retina, and a problem such as darkened vision may be caused in using the soft contact lens.

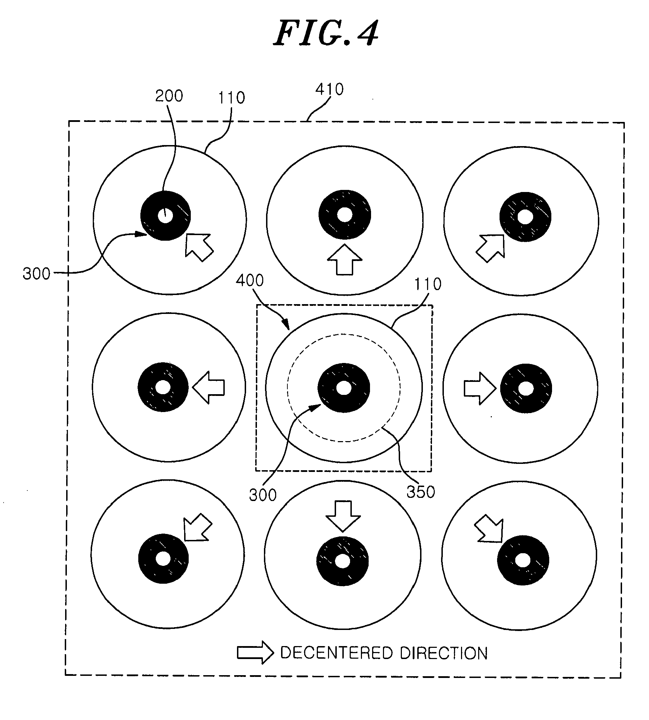

FIG. 4 is a diagram showing an example where a position of forming the presbyopia correction pattern 300 on the soft contact lens is varied in consideration of corneal topographic patterns of users according to an exemplary embodiment of the present disclosure.

As depicted in FIG. 4, from a standard design 400 where the presbyopia correction pattern 300 including the light transmitting region 200, the first light blocking region 202 and the second light blocking region 206 is located at the center of the soft contact lens 110, various modified designs 410 where the presbyopia correction pattern 300 is deviated from the center of the center of the soft contact lens 110 in, e.g., a circumferential direction may be formed to correspond to the different corneal topographic patterns of the individual users.

That is, the light transmitting region 200 of the presbyopia correction pattern 300 may be formed to have a preset size with reference to a reference point which is spaced apart from the center of the soft contact lens. For example, the light transmitting region 200 may be formed at a corresponding position on the soft contact lens 110 such that the center of the eyeball 302 of a user is located on the light transmitting region 200. At this time, to align the light transmitting region 200 to the eyeball 302 such that their centers coincide with each other, a distance and a direction in which the center of the eyeball of the soft contact lens user is deviated from the center of the soft contact lens may be calculated, and the reference point for the light transmitting region 200 may be moved from the center based on the calculation result, but not limited thereto.

Moreover, as another embodiment for the placement of the presbyopia correction pattern 300, for example, an imaginary reference circle 350 having a preset diameter from the center of the soft contact lens 110 is assumed, and the presbyopia correction pattern 300 may be formed within the reference circle 350. As depicted in FIG. 4, this reference circle 350 may have a size larger than the first light blocking region 202 but smaller than the soft contact lens 110.

Hereinafter, a process of forming the presbyopia correction pattern 300 on the soft contact lens 110 while adjusting it to be suitable for a corneal topographical pattern of a user will be described again in a further detailed manner.

First, by examining a state where the user puts on the soft contact lens 110 for presbyopia correction through the use of a slit lamp microscope or the like, it is inspected whether the light transmitting region 200 of the presbyopia correction pattern 300 is located on the right center of the eyeball 302 of the user.

As a result of the inspection, if the light transmitting region 200 of the presbyopia correction pattern 300 does not exactly lie on the center of the eyeball 302 of the user, that is, if the light transmitting region 300 and the eyeball 302 are not concentric, a distance and a direction in which the light transmitting region 200 is deviated from the center of the eyeball 302 are calculated. Then, by forming the light transmitting region 200 while deviating it from the center of the soft contact lens 110 the calculated distance in the opposite direction to that calculated, that is, by forming the light transmitting region 200 while decentering it from the soft contact lens 110, the light transmitting region 200 can be made to lie on the center of the eyeball 302.

In this way, by adjusting the position of forming the presbyopia correction pattern 300 on the soft contact lens 110 according to the corneal topographic patterns of the individual users, the users are allowed to use the soft contact lens 110 without any problems.

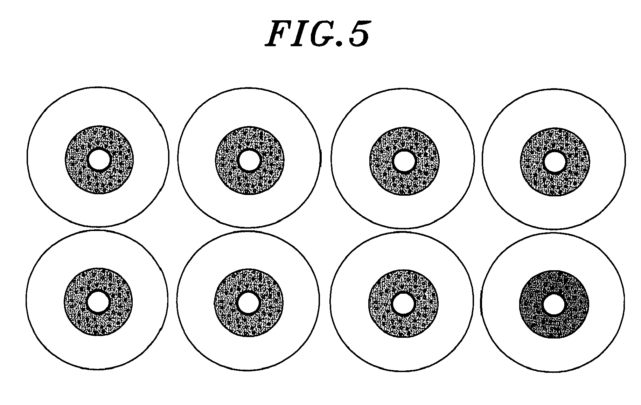

FIG. 5 shows various patterns for coloring the light transmitting region 200, the first light blocking region 202 and the second light blocking region 206 according to an exemplary embodiment of the present disclosure.

As depicted in FIG. 5, a part or the whole of the light transmitting region 200 and the first light blocking region 202 can be tinted with colors capable of adjusting contrast sensitivity of vision, for example, a brown color or a black color. The second light blocking region 206 may be tinted with a darker color in the same range as the color of the first light blocking region 202.

Further, as for the above-described coloring of the light transmitting region 200, the first light blocking region 202 and the second light blocking region 206, their colors can be selected depending on a wavelength of the light to be blocked, and the brightness or darkness thereof can also be adjusted.

Accordingly, by coloring the light transmitting region 200, the first light blocking region 202 and the second light blocking region 206, the contrast sensitivity can be adjusted, and, further, by blocking ultraviolet rays or blue light, impairment of optic nerves or cells can be prevented. Additionally, even an esthetic effect can be achieved when the soft contact lens is applied to a user who has suffered damage in iris such as iridocoloboma.

According to the exemplary embodiments of the present disclosure as described above, in the manufacture of a soft contact lens for presbyopia, by forming a light transmitting region having a certain diameter with respect to a reference point, which is spaced apart from the center of the soft contact lens by a certain distance, incident light upon eyes can be selectively blocked, and, thus, the depth of a focus can be improved. Further, by forming a light blocking region having a certain diameter at an outside of the light transmitting region and forming fine holes in the light blocking region such that a distribution density of the fine holes increases toward an outer edge of the light blocking region, .a sufficient amount of light, which might not be obtained under the presence of the light blocking region, can be achieved, so that bright vision can be achieved. Additionally, since a position of forming a presbyopia improving pattern including the light transmitting region and the light blocking region on the soft contact lens is adjustable according to a corneal topographic pattern of a user, the soft contact lens can be used without problems when applied to different users having different corneal topographic patterns Moreover, .by tinting the light transmitting region and the light blocking region with colors capable of adjusting contrast sensitivity, not only the contrast sensitivity can be adjusted, but ultraviolet rays or blue light can also be blocked, thus preventing impairment of the optic nerves or cells.

Although exemplary embodiments of the present disclosure are described above with reference to the accompanying drawings, those skilled in the art will understand that the present disclosure may be implemented in various ways without changing the necessary features or the spirit of the present disclosure. Therefore, it should be understood that the exemplary embodiments described above are not limiting, but only an example in all respects. The scope of the present disclosure is expressed by claims below, not the detailed description, and it should be construed that all changes and modifications achieved from the meanings and scope of claims and equivalent concepts are included in the scope of the present disclosure.

## Claims

1. A soft contact lens, comprising:
a light transmitting region formed in a preset size with respect to a reference point which is spaced apart from a central portion of the contact lens by a preset distance, and configured to transmit incident light; and
a first light blocking region provided at an outside of the light transmitting region and having a size larger than the light transmitting region and smaller than the soft contact lens, and configured to block the incident light.

2. The soft contact lens of Claim 1,
wherein a multiple number of fines holes for allowing the incident light to pass therethrough is distributed across the entire first light blocking region in a non-uniform manner.

3. The soft contact lens of Claim 1,
wherein the reference point is spaced apart from the central portion of the soft contact lens to correspond to a distance and a direction in which a center of an eyeball of a user is deviated from the central portion of the soft lens.

4. The soft contact lens of Claim 1,
wherein the light transmitting region is formed at a certain position on the soft contact lens within the range of a reference circle which is formed to have a preset diameter from the central portion, and
the reference circle is larger than the first light blocking region and smaller than the soft contact lens.

5. The soft contact lens of Claim 2,
wherein the fine holes are distributed such that a distribution density increases toward an outer edge of the first light blocking region.

6. The soft contact lens of Claim 1, further comprising:
a second light blocking region provided at an adjacent area between the light transmitting region and the first light blocking region and having a size smaller than the first light blocking region, and configured to block the incident light.

7. The soft contact lens of Claim 1,
wherein the soft contact lens is a color lens tinted with a certain color.

8. A manufacturing method for a soft contact lens, comprising:
forming a light transmitting region, which is configured to transmit incident light and has a preset size, with respect to a reference point which is spaced apart from a central portion of the contact lens by a preset distance; and
forming, at an outside of the light transmitting region, a first light blocking region which is configured to block the incident light and has a size larger than the light transmitting region and smaller than the soft contact lens.

9. The manufacturing method of Claim 8, further comprising:
forming a multiple number of fines holes for allowing the incident light to pass therethrough across the entire first light blocking region in a non-uniform manner.

10. The manufacturing method of Claim 8,
wherein the reference point is spaced apart from the central portion of the soft contact lens to correspond to a distance and a direction in which a center of an eyeball of a user is deviated from the central portion of the soft lens.

11. The manufacturing method of Claim 8,
wherein the light transmitting region is formed at a certain position on the soft contact lens within the range of a reference circle which is formed to have a preset diameter from the central portion, and
the reference circle is larger than the first light blocking region and smaller than the soft contact lens.

12. The manufacturing method of Claim 8,
wherein the light transmitting region is formed to have a diameter larger than zero (0) and smaller than a diameter of an opening portion on an eye lens on which the soft contact lens is put on.

13. The manufacturing method of Claim 8,
wherein the first light blocking region is formed to be concentric with the light transmitting region and to have a doughnut shape having a diameter larger than a diameter of the light transmitting region and smaller than a diameter of the soft contact lens.

14. The manufacturing method of Claim 9,
wherein the fine holes are formed such that a distribution density thereof increases toward an outer edge of the first light blocking region.

15. The manufacturing method of Claim 8, further comprising:
forming, at an adjacent area between the light transmitting region and the first light blocking region, a second light blocking region having a size smaller than the first light blocking region and configured to block the incident light.
